# EUROPEAN PATENT SPECIFICATION

(11) **EP 2 976 395 B1**
(45) Date of publication and mention of the grant of the patent: **13.09.2017**
(21) Application number: 14711791.5
(22) Date of filing: 24.03.2014
(51) Int. Cl.: C09D 5/18, C09D 7/12

(54) **PREFABRICATED FLOOR**
VORGEFERTIGTER BODEN
PLANCHER PRÉFABRIQUÉ

(30) Priority: 22.03.2013 SE 1350361
(43) Date of publication of application: 27.01.2016
(73) Proprietor: Fürstenberg Amfi-Floor Ltd., Riga 1011 (LV)
(72) Inventor: FÜRSTENBERG-RYSJEDAL, Svein, N-5252 Söreidgrend (NO)
(74) Representative: Awapatent AB
(86) International application number: PCT/EP2014/055824
(87) International publication number: WO 2014/147258

(56) References cited:
- EP-A1- 0 839 853
- WO-A1-87/00852
- GB-A- 1 439 191
- GB-A- 2 429 712
- JP-A- S61 293 291
- US-A- 5 883 182

## Description

### Technical field

The present invention relates generally to a pre-fabricated wet room floor. More particularly, the present invention relates to a pre-fabricated wet room floor made of a solid surface material as defined in the introductory parts of claim 1.

### Background art

Pre-fabricated wet room floors are often used in e.g. ships, hotels, and apartments. They have historically been made of a number of different types of constructions.

On ships a common construction is to use pre-fabricated steel constructions that are welded together to facilitate a fall to a drain and other structural features that are needed or wanted for a wet room or bathroom floor. The walls are painted to protect the steel from water and to create a nice environment for the user. However, the end result regarding the environment having a painted steel floor is not particularly nice, and the steel construction is easily affected by wear and outer force so that the fall towards the drain may be lost. If the paint is broken, the steel will be affected by corrosion leading to rust, inducing a regular maintenance need for the floor.

A step for improving the above problems somewhat is to have a steel construction with concrete, sometimes floor heating in the concrete, screed or cement for creating a fall to a drain, a liquid tight layer and clinker on top. This has the drawback that the construction becomes very heavy. If the steel starts to corrode, it is very hard to remedy without starting over by removing all layers and rebuild it again.

A further common construction that overcomes the problems of corrosion, rust and weight, is using a glass-fibre reinforced plastic construction covered by a water proof gel-coat in a similar manner as plastic sail yachts and smaller motor yachts are constructed. Although such a construction is light weight and does not corrode, it has a number of drawbacks. A moulding form has to be made for moulding the glass-fibre reinforced plastic construction. Such a mould is labour intense and expensive to produce. If the gel-coat, which is fairly fragile, is broken, the glass-fibre will absorb moist and swell, leading to a destroyed floor. Even though gel-coat is fairly resistant to stains, the material can absorb dirt and chemicals and get stained in a way that is hard to clean off. The gel-coat surface will only stand for up to 70°C before it starts to react and melt. This is a fire hazard, that may be expensive to handle in hotels and ships.

There is thus a need for an improved pre-fabricated wet room floor that is not heavy as steel and concrete solutions, that does not corrode in wet environments, that is less fragile than the glass-fibre solutions, that is easier to adapt in size and shape than the glass-fibre solution and that can withstand high temperatures to meet higher fire safety standards.

The following relevant patent documents show technical solutions in near-lying technical fields. GB 2 429 712 shows a fire-stop product, US 5 883 182 shows specific coating compositions, EP 0 839 853 shows sprayable silicone emulsions which form smoke ad fire resitant elastomers, WO 87/00852 shows a fire retardant composition, JP S61 293291 shows a putty-like fireproof composition and GB 1 439 191 shows fabrication of structural members.

### Summary of the invention

It is an object of the present invention to improve the current state of the art, to solve the above problems, and to provide an improved wet room floor that is fairly light weight, does not corrode, is robust, easy to adjust for different applications and can withstand high temperatures. These and other objects are achieved by a pre-fabricated wet room floor comprising a wear surface that is made of a solid surface material, wherein said solid surface material is composed of aluminium trihydrate (ATH) or aluminium monohydrate (AMH) and a polymer binding medium, wherein said solid surface material has a ATH or AMH content of above 50%.

The wear surface, that is the upper surface of the floor subjected to wear from usage of the wet room floor, being made of said solid surface material, will produce a very wear-resistant surface, that is light weight and does not corrode. A minimum of maintenance will be needed having such a wet room floor.

The pre-fabricated wet room floor preferably further has a solid surface material with a ATH or AMH content of 50 - 90% by weight, more preferably 60 - 80% by weight and most preferably 70-80% by weight. The high ratio of ATH or AMH to binder material will give the material good heat resistance. Tests has shown that by having 80% ATH or AMH to binder in the solid surface material, the material will withstand temperatures of up to 200°C, which will make the pre-fabricated floor much easier to incorporate into the fire safety standards of e.g. hotels and large ships. Especially on off-shore oil rigs, the fire safety standards are extremely high making the pre-fabricated wet room floor of the present invention ideal.

The pre-fabricated wet room floor according to the invention further preferably has a binding medium that is a polymer or an equivalent material to a polymer. The polymer may e.g. be a acryl-modified polyester. ATH or AMH and a polymer are so similar to each other in their chemical structure so that, when the solid surface material has cured, it will not absorb liquids or other chemical agents. The material is so insensitive to other substances that it can even stand most acids without being stained or absorbing any of it. This has the effect that the wet room floor will be easy to clean, and since it does not absorb other substances easily it is hard to stain. This makes the floor durable with a long lifetime which will bring down maintenance costs to a minimum.

The pre-fabricated wet room floor discussed above, preferably has a wear surface area of 1 - 10 m², which is a reasonable area range for prefabrication and later transportation.

It is further preferred that the wear surface of the pre-fabricated wet room floor is moulded in said solid surface material. Moulding the wear surface, makes it easy to adapt it to any shape that is desired and no welding has to be performed to fit parts together, e.g. the wall parts of the wet room floor. Structures for fastening equipment or guiding water can also be made. It is e.g. usual that a shower wall is to be installed in the bathroom at a later stage. The fall towards the drain of the wet room floor may also easily be pre-fabricated by moulding.

It is further preferred that substantially the entire structure of the pre-fabricated wet room floor is made of said solid surface material. The entire floor is then made of the same material that is used as wear surface. It is then more or less impossible to damage the floor so that it starts to leak, since the solid surface material is extremely strong and is liquid tight throughout its thickness or cross section. It is also possible to mould in drainage piping into the floor itself, removing some of the need for external pluming. The floor may e.g. be made to directly be attached to drainage pipes in the room it is intended to be placed. The thickness of the floor, when substantially its entire structure is made of the solid surface material is preferably above 10 mm, more preferably above 15 mm, most preferably above 20 mm.

However, to make the floor less heavy or for other practical reasons, the pre-fabricated wet room floor may be made by a structure of any common floor material covered by said solid surface material. As long as the wear surface is made by said solid surface material, the most important advantages of the invention will still be obtained, as e.g. durability, resistance to stains and its high temperature resistance properties.

If only the wear surface is of the solid surface material the thickness of said solid surface material may be below 10 mm, even below 5 mm. A thin layer of the solid surface material may be desirable, if a structure is coated by a sheet of the solid state material instead of using moulding.

According to a further aspect of the present invention the pre-fabricated wet room floor further comprises a floor drain, wherein the outlet of the floor drain is located on the side of said pre-fabricated wet room floor. In that way the drainage may be attached to a drainage in the wall of the space that the wet room floor is intended for. That will save ceiling height, which may be very important, e.g. on ships.

According to a still further aspect of the invention the pre-fabricated wet room floor contains floor heating conductor elements moulded into said solid surface material. The possibility to mould the floor makes it easy to embed any equipment that may be desired in the wet room floor. Further equipment that may be embedded are e.g. thermal sensors, moist sensors etc.

According to a still further aspect of the invention the pre-fabricated wet room floor contains floor has a dedicated portion intended for a shower. The dedicated portion may e.g. have an increased fall for water to be more effective transported by gravity to the drain of the floor. The remaining portions of the wet room floor may facilitate a portion for changing cloths, a portion above which a sink is intended to be placed etc.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a perspective view of a pre-fabricated wet room floor according to the present invention.
Fig. 2 is a photograph of a pre-fabricated wet room floor according to the present invention.

### Detailed description of preferred embodiments of the invention

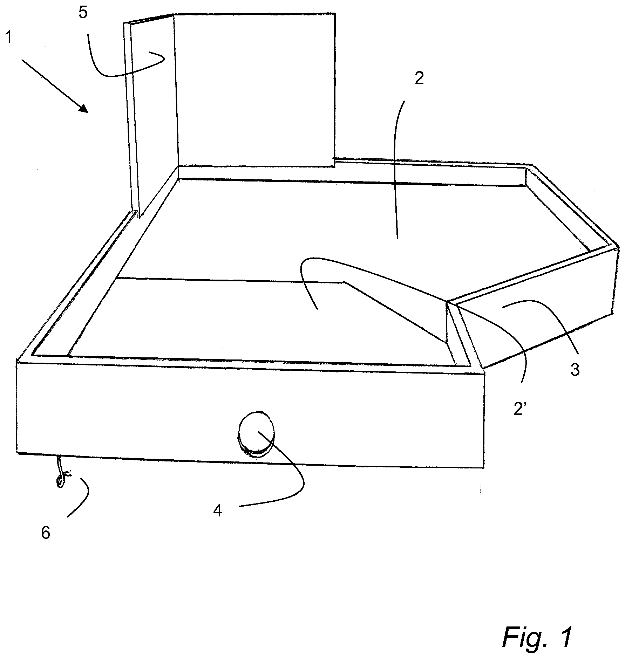

Fig. 1 shows a perspective view of a pre-fabricated wet room floor 1, having a wear surface 2 that is made of solid surface material 2, the material being made by a major portion ATH or AMH and a binder, preferably a polymer. To have a high melting point for fire safety reasons, the solid surface material 2 preferably has around 80% of ATH or AMH and 20% binder. The wet room floor 1 is moulded and has a fall portion 2' having a fall towards a drain 4, which drain 4 in Fig. 1 penetrates the side wall 3. The fall portion 2' is naturally intended to be the floor of the shower part of a bathroom. Although not clearly visible in Fig. 1, also the remaining parts of the wear surface 2 of the wet room floor 1 may have a fall towards the drain so that water will drain away also from the rest of the wear surface 2. This makes cleaning with water easier.

The pre-fabricated wet room floor of Fig. 1 also has moulded structure 5 for fitting to its intended destination room. The floor also has floor heating elements (not shown) moulded into the floor, the connection cables 6, being visible in Fig. 1.

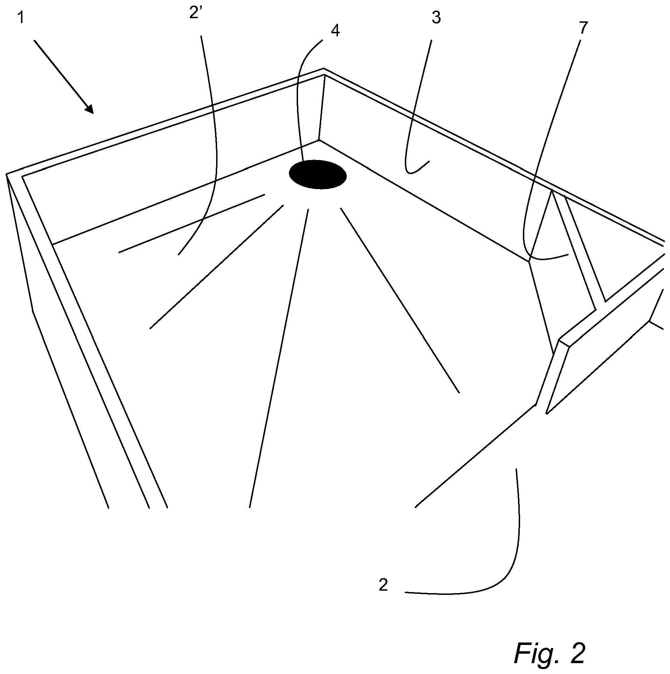

Fig. 2 is a photograph of a pre-fabricated wet room floor 1 according to the present invention. This pre-fabricated floor also has a wear surface 2 that is made of solid surface material 2, the material being made by a major portion ATH or AMH and a binder, preferably a polymer. To have a high melting point for fire safety reasons, the solid surface material 2 preferably has around 80% of ATH or AMH and 20% binder.

The wet room floor 1 of Fig. 2 is moulded and has a fall 2' towards a drain 4, which drain 4 in Fig. 2 is located entirely in the horizontal fall surface 2' of the floor surface, naturally at the lowest point of the fall portion 2'. As can be seen in Fig. 2, the entire floor is moulded in the solid surface material. The pre-fabricated wet room floor 1 of Fig. 2 also has structural portions 7 intended for fitting to the intended bathroom where the wet room floor 1 is intended to be mounted, e.g. a compartment for water supply hoses or pipes. In Fig. 2, small structures may also be seen on the upper edge of the side walls 3, intended to facilitate easier fitting to the wall portions of the bathroom having the pre-fabricated wet room floor 1 of Fig. 2.

## Claims

1. A pre-fabricated wet room floor (1) for increasing the fire safety of a wet room comprising a wear surface (2, 2') that is made of a solid surface material,
wherein said solid surface material is composed of aluminium trihydrate (ATH) or aluminium monohydrate (AMH) and a polymer binding medium,
wherein said solid surface material has a ATH or AMH content of above 50%.

2. Pre-fabricated wet room floor (1) according to any one of the preceding claims, wherein said solid surface material has a ATH or AMH content of 50 - 90% by weight.

3. Pre-fabricated wet room floor (1) according to any one of the preceding claims, wherein said solid surface material has a ATH or AMH content of 60 - 80% by weight.

4. Pre-fabricated wet room floor (1) according to any one of the preceding claims, wherein said solid surface material has a ATH or AMH content of 70-80% by weight.

5. Pre-fabricated wet room floor (1) according to any one of the preceding claims, wherein said polymer material is an acrylic modified polyester.

6. Pre-fabricated wet room floor (1) according to any one of the preceding claims having a wear surface area (2, 2') of 1 - 10 m².

7. Pre-fabricated wet room floor (1) according to any one of the preceding claims, wherein the wear surface (2, 2') of the pre-fabricated wet room floor (1) is moulded.

8. Pre-fabricated wet room floor (1) according to any one of the preceding claims, wherein substantially the entire structure of the wet room floor (1) consists of said solid surface material.

9. Pre-fabricated wet room floor (1) according to claim 8, wherein the thickness of the pre-fabricated wet room floor (1) is above 10 mm, preferably above 15 mm, most preferably above 20 mm.

10. Pre-fabricated wet room floor (1) according to any one of claims 1-6, wherein the wet room floor (1) is made by a structure of any common floor material covered by said solid surface material.

11. Pre-fabricated wet room floor (1) according to claim 8, wherein the thickness of said solid surface material is below 10 mm, preferably below 5 mm.

12. Pre-fabricated wet room floor (1) according to any one of the preceding claims, further comprising a floor drain (4), wherein the outlet of the floor drain (4) is located on the side of said pre-fabricated wet room floor (1).

13. Pre-fabricated wet room floor (1) according to any one of the preceding claims wherein said floor contains floor heating conductor elements moulded into said solid surface material.

14. Pre-fabricated wet room floor (1) according to any one of the preceding claims, wherein said floor has a dedicated portion intended for a shower.

## Patentansprüche

1. Vorgefertigter Nassraumboden (1) zum Erhöhen der Brandsicherheit eines Nassraums, umfassend eine Abnutzungsoberfläche (2, 2'), die aus einem festen Oberflächenmaterial hergestellt ist,
wobei das feste Oberflächenmaterial aus Aluminiumtrihydrat (ATH) oder Aluminiummmonohydrat (AMH) und einem polymerbindenden Medium besteht,
wobei das feste Oberflächenmaterial einen ATH- oder AMH-Gehalt von über 50 % aufweist.

2. Vorgefertigter Nassraumboden (1) nach einem der vorhergehenden Ansprüche, wobei das feste Oberflächenmaterial einen ATH- oder AMH-Gehalt von 50 - 90 Gew.-% aufweist.

3. Vorgefertigter Nassraumboden (1) nach einem der vorhergehenden Ansprüche, wobei das feste Oberflächenmaterial einen ATH- oder AMH-Gehalt von 60 - 80 Gew.-% aufweist.

4. Vorgefertigter Nassraumboden (1) nach einem der vorhergehenden Ansprüche, wobei das feste Oberflächenmaterial einen ATH- oder AMH-Gehalt von 70 - 80 Gew.-% aufweist.

5. Vorgefertigter Nassraumboden (1) nach einem der vorhergehenden Ansprüche, wobei das Polymermaterial ein acrylmodifizierter Polyester ist.

6. Vorgefertigter Nassraumboden (1) nach einem der vorhergehenden Ansprüche, der einen Abnutzungsoberflächenbereich (2, 2') von 1 - 10 m² aufweist.

7. Vorgefertigter Nassraumboden (1) nach einem der vorhergehenden Ansprüche, wobei die Abnutzungsoberfläche (2, 2') des vorgefertigten Nassraumbodens (1) geformt ist.

8. Vorgefertigter Nassraumboden (1) nach einem der vorhergehenden Ansprüche, wobei im Wesentlichen die gesamte Struktur des Nassraumbodens (1) aus dem festen Oberflächenmaterial besteht.

9. Vorgefertigter Nassraumboden (1) nach Anspruch 8, wobei die Dicke des vorgefertigten Nassraumbodens (1) über 10 mm, bevorzugt über 15 mm, am bevorzugtesten über 20 mm liegt.

10. Vorgefertigter Nassraumboden (1) nach einem der Ansprüche 1 bis 6, wobei der Nassraumboden (1) durch eine Struktur irgendeines üblichen Bodenmaterials, das durch das feste Oberflächenmaterial bedeckt ist, hergestellt ist.

11. Vorgefertigter Nassraumboden (1) nach Anspruch 8, wobei die Dicke des festen Oberflächenmaterials unter 10 mm, bevorzugt unter 5 mm liegt.

12. Vorgefertigter Nassraumboden (1) nach einem der vorhergehenden Ansprüche, ferner einen Bodenablauf (4) umfassend, wobei der Auslass des Bodenablaufs (4) sich auf der Seite des vorgefertigten Nassraumbodens (1) befindet.

13. Vorgefertigter Nassraumboden (1) nach einem der vorhergehenden Ansprüche, wobei der Boden Bodenheizleiterelemente enthält, die in das feste Oberflächenmaterial eingebettet sind.

14. Vorgefertigter Nassraumboden (1) nach einem der vorhergehenden Ansprüche, wobei der Boden einen zweckbestimmten Teil aufweist, der für eine Dusche bestimmt ist.

## Revendications

1. Plancher de pièce humide préfabriqué (1) pour améliorer la protection contre les incendies d'une pièce humide comprenant une surface d'usure (2, 2') qui est constituée d'un matériau de surface solide,
dans lequel ledit matériau de surface solide est composé de trihydrate d'aluminium (ATH) ou de monohydrate d'aluminium (AMH) et d'un milieu liant de polymère,
dans lequel ledit matériau de surface solide possède une teneur en ATH ou AMH supérieure à 50 %.

2. Plancher de pièce humide préfabriqué (1) selon l'une quelconque des revendications précédentes, dans lequel ledit matériau de surface solide possède une teneur en ATH ou AMH comprise entre 50 et 90 % en poids.

3. Plancher de pièce humide préfabriqué (1) selon l'une quelconque des revendications précédentes, dans lequel ledit matériau de surface solide possède une teneur en ATH ou AMH comprise entre 60 et 80 % en poids.

4. Plancher de pièce humide préfabriqué (1) selon l'une quelconque des revendications précédentes, dans lequel ledit matériau de surface solide possède une teneur en ATH ou AMH comprise entre 70 et 80 % en poids.

5. Plancher de pièce humide préfabriqué (1) selon l'une quelconque des revendications précédentes, dans lequel ledit matériau de surface solide est un polyester modifié d'acrylique.

6. Plancher de pièce humide préfabriqué (1) selon l'une quelconque des revendications précédentes possédant une aire de surface d'usure (2, 2') comprise entre 1 et 10 m².

7. Plancher de pièce humide préfabriqué (1) selon l'une quelconque des revendications précédentes, dans lequel la surface d'usure (2, 2') du plancher de pièce humide préfabriqué (1) est moulée.

8. Plancher de pièce humide préfabriqué (1) selon l'une quelconque des revendications précédentes, dans lequel la surface d'usure (2, 2') du plancher de pièce humide préfabriqué (1) consiste en ledit matériau de surface solide.

9. Plancher de pièce humide préfabriqué (1) selon la revendication 8, dans lequel l'épaisseur du plancher de pièce humide préfabriqué (1) est supérieure à 10 mm, de préférence supérieure à 15 mm, encore plus préférablement supérieure à 20 mm.

10. Plancher de pièce humide préfabriqué (1) selon l'une quelconque des revendications 1 à 6, dans lequel le plancher de pièce humide (1) est fabriqué à partir d'une structure provenant de n'importe quel matériau de plancher commun recouverte par ledit matériau de surface solide.

11. Plancher de pièce humide préfabriqué (1) selon la revendication 8, dans lequel l'épaisseur dudit matériau de surface solide est inférieure à 10 mm, de préférence inférieure à 5 mm.

12. Plancher de pièce humide préfabriqué (1) selon l'une quelconque des revendications précédentes, comprenant en outre un siphon de sol (4), dans lequel la sortie du siphon de sol (4) est situé sur le côté dudit plancher de pièce humide préfabriqué (1).

13. Plancher de pièce humide préfabriqué (1) selon l'une quelconque des revendications précédentes dans lequel ledit plancher contient des éléments conducteurs de chauffage au sol moulés à l'intérieur dudit matériau de surface solide.

14. Plancher de pièce humide préfabriqué (1) selon l'une quelconque des revendications précédentes, dans lequel ledit plancher possède une partie consacrée destinée à une douche.
